# NEUE EUROPÄISCHE PATENTSCHRIFT

(11) **EP 2 166 312 B2**
(45) Veröffentlichungstag und Bekanntmachung des Hinweises auf die Entscheidung über den Einspruch: **15.01.2020**
(45) Hinweis auf die Patenterteilung: 27.06.2012
(21) Anmeldenummer: 08105376.1
(22) Anmeldetag: 18.09.2008
(51) Int. Cl.: G01D 5/14

(54) **Magnetischer oder induktiver Wegsensor**
Magnetic or inductive waypoint sensor
Capteur de trajectoire magnétique ou inductif

(43) Veröffentlichungstag der Anmeldung: 24.03.2010
(73) Patentinhaber: SICK AG, 79183 Waldkirch (DE)
(72) Erfinder: Baak, Josef, 79183, Waldkirch (DE)
(74) Vertreter: Ludewigt, Christoph

(56) Entgegenhaltungen:
- EP-A- 1 074 815
- EP-A1- 1 074 815
- EP-A2- 1 489 385
- DE-A1- 3 244 891
- DE-A1- 10 243 412
- DE-A1- 10 342 473
- DE-A1- 19 805 225
- DE-A1- 19 805 225
- US-A- 6 137 403
- US-A1- 2002 145 418
- US-A1- 2002 145 418
- US-B2- 7 218 099

## Beschreibung

Die Erfindung betrifft einen magnetischen oder induktiven Wegsensor und ein Verfahren zur Wegmessung nach dem Oberbegriff von Anspruch 1 und Anspruch 9.

Magnetische oder induktive Wegsensoren werden zum Beispiel eingesetzt, um Kolbenbewegungen in hydraulischen oder pneumatischen Systemen zu überwachen.

Es sind magneto-induktive Sensoren bekannt, welche über Primärwicklungen zur Felderzeugung und Sekundärwicklungen zur positionsabhängigen Felddetektion verfügen. Diese haben den Nachteil, dass jeweils eine Vielzahl von Wicklungen elektrisch separat verschaltet werden müssen, was unerwünscht mit hohem Aufwand umgesetzt werden muss.

Weiterhin ist ein Positionssensor durch die Schrift DE 103 42 473 A1 derart beschrieben, dass sich auf einem ferromagnetischen Kern eine Spule mit entlang der Längsrichtung variierender Windungsdichte befindet und dass durch einen verschiebbaren Magneten unterschiedliche Abschnitte des Spulenkernes in Sättigung gebracht werden, so dass sich eine Spule mit positionsabhängiger Charakteristik ergibt. Der Nachteil in dieser Ausführung liegt darin, dass in vielen Anwendungen eine lineare Charakteristik des Positionssignals gefordert wird. Soll eine Ausführung der Variation der Windungsdichte derart erfolgen, dass sich eine lineare Induktivitätsänderung bei Verschieben des Magneten ergibt, so wird dies mit der in DE 103 42 473 A1 dargestellten Realisierung erfüllt, indem die Windungsdichte nicht linear über die Messlänge ab- oder zunimmt. Dadurch wird die maximal mögliche Messlänge stark begrenzt, da z. B. bei linearer Abnahme der Windungsdichte bereits nach kurzer Wegstrecke Bereiche ohne wirksamen Induktivitätsbelag vorliegen.

Ein weiterer Nachteil dieser Ausführung besteht darin, dass die positionsabhängige Messgröße von der Wicklungsdichte der Spule abhängt. In einer Vielzahl von Anwendungen ist als wegabhängiges Signal jedoch ein Gleichstrom- oder Gleichspannungswert erwünscht, das nicht erst elektronisch aufwändig aus einer Spulencharakteristik gewonnen werden muss.

Aus der DE 32 44 891 C2 ist ein Positionssensor mit einer in einer Reihe angeordneten Einzelsensoren bekannt. Die Einzelsensoren sind beispielsweise als Hallelemente, als magnetempfindliche Dioden oder magnetempfindliche Widerstände ausgebildet. Die Einzelsensoren werden dabei von einem vorbeibewegten Magneten beeinflusst, wodurch eine lineare Position des Magneten festgestellt werden kann. Bei dem Positionssensor ist es vorgesehen, eine Position als Nullpunkt z. B. über einen Knopfdruck einzustellen. Eine Elektronik kann diesen Wert abspeichern und alle Abweichungen von diesem Wert, sowohl ins Positive als auch ins Negative als Positionsabweichung angeben. Ein Nullpunkt ist beliebig wählbar. Eine Genauigkeit des Positionssensors ist im Wesentlichen bestimmt durch die mögliche Anzahl von Einzelsensoren auf einer Längeneinheit.

Aus der EP 1 074 815 A1 ist ein Sensor zur Detektion eines beweglichen Magnetfeldes, beispielsweise einer Kolben/Zylinderanordnung bekannt. Dabei sind zwei Sensorelemente angeordnet, welche jeweils unterschiedliche vektorielle Anteile des Magnetfeldes erfassen. Weiter ist ein Manipulator vorgesehen, der die Ausgangssignale der Sensorelemente miteinander verknüpft, um anzugeben, in welcher Position sich der Magnet befindet.

Aus der DE 198 05 225 A1 ist eine Positionserfassungsvorrichtung zur Erfassung wenigstens einer Relativposition bekannt. Dabei ist ein Feldbeeinflussungsmittel vorgesehen, beispielsweise ein hülsenähnliches Abschirmteil, welches in einer nichtschaltenden Relativposition die Feldstärke des Magnetfeldes herabsetzt und in einer schaltenden Relativposition eine Feldstärke zulässt, so dass eine Betätigung des Sensors erfolgt.

Die DE 102 43 412 A1 offenbart eine Schaltungsanordnung für einen Wegsensor.

Die US 6 137 403 offenbart einen Tür-Sensor mit einer Vielzahl von Sensorelementen.

Die EP 1 489 385 A2 offenbart eine Vorrichtung zur Sensierung der axialen Stellung von einem ersten Bauteil, dass relativ zu einem zweiten Bauteil bewegt wird.

Die US 7 218 099 B2 offenbart eine Kolben-/Zylinderanordnung mit mehreren Hallsensoren.

Die Aufgabe der Erfindung ist es, einen Wegsensor zu schaffen, welcher ein Ausgangssignal mit Abhängigkeit von der Position eines Gebermagneten aufweist und der für verschiedene Wegstrecken ein optimal hoch aufgelöstes Ausgangssignal bereitstellt. Das Ausgangssignal soll zusätzlich unabhängig von der Polausrichtung des Gebermagneten sein. Der Wegsensor soll einfach zu justieren sein und einen großen Messbereich ermöglichen.

Die Aufgabe wird gelöst durch einen magnetischen Wegsensor oder einen induktiven Wegsensor nach Anspruch 1.
Die Aufgabe wird auch durch ein Verfahren gelöst nach Anspruch 8.
Es ist möglich, den Wertebereich des Positionssignals beliebig auf eine gewünschte Strecke zwischen einer ersten Endposition und einer zweiten Endposition des bewegten Mittels einzustellen. Dadurch kann das Positionssignal genau auf eine bestimmte Anwendung angepasst werden.

Es entfällt eine mechanische Feinjustierung des Sensors in Bezug auf das bewegbare Mittel. Der magnetische oder induktive Wegsensor braucht zunächst nur grob entlang des bewegbaren Mittels angeordnet zu werden. Danach wird über eine Zuordnung der Grenzwerte des Wertebereichs zu der ersten Endposition und zweiten Endposition eine Feinjustierung elektronisch vorgenommen.

Durch die Einstellung des Wertebereichs auf die gewünschte zu messende Strecke ist der magnetische oder induktive Wegsensor für verschiedene Mittel, die unterschiedliche Wege zurücklegen, einsetzbar, wobei das Positionssignal einen gewünschten, insbesondere identischen Wertebereich aufweist.

Das Positionssignal ist durch die elektronische Einstellung unabhängig von einer Polung und einer Einbaulage des Dauermagneten. Dadurch kann der magnetische oder induktive Sensor für eine Vielzahl von bewegbaren Mitteln eingesetzt werden, da die Polung des Dauermagneten nicht beachtet werden muss.

Die Einbaurichtung des Wegsensors längs der Strecke kann frei gewählt werden, da die erste Endposition und die zweite Endposition in beliebiger Reihenfolge eingelernt werden können. Dadurch kann der Wegsensor in einer ersten Richtung längs der Strecke oder .längs um 180° verdreht angeordnet werden. Anschließend wird ein Verlauf des Positionssignals wie gewünscht angepasst. Bei montiertem Wegsensor kann der Verlauf des Positionssignals dabei beispielsweise von 0 bis 10 Einheiten eingestellt werden, oder umgekehrt von 10 bis 0 Einheiten, ausgehend von einer Endposition. Dadurch ist das Positionssignal einfach für eine nachfolgende externe Auswertung anpassbar.

Die Anzahl der Sensorelemente des magnetischen oder induktiven Wegsensors beträgt dabei beispielsweise acht oder ein Vielfaches davon. Je nach Ausführung weist der Sensor somit acht, sechzehn, vierundzwanzig usw. Sensorelemente auf. Durch die Anzahl der Sensorelemente ist der magnetische oder induktive Wegsensor an einen bestimmten Messbereich anpassbar. Für sehr kleine Messbereiche kann der magnetische Wegsensor beispielsweise auch lediglich zwei bis acht Sensorelemente umfassen. Eine Anzahl der Sensorelemente ist jedoch beliebig wählbar. Die Sensorelemente können als Hallelemente, als magnetempfindliche Dioden, magnetempfindliche Widerstände oder als Spulen ausgebildet sein.

Die Grenzwerte weisen bevorzugt jeweils einen maximalen oder minimalen Wert des Wertebereiches auf. Dadurch steht immer eine maximale Auflösung des Positionssignals zur Verfügung. Gerade bei sehr kleinen Strecken des bewegbaren Mittels, beispielsweise 20 mm, wird für diese Strecke ein gesamter elektronisch möglicher Wertebereich von beispielsweise 0 bis 10 V genutzt.

Die Positionen entlang der Strecke und die Werte des Wertebereichs sind bevorzugt linear zueinander. Dadurch kann das Positionssignal sehr einfach ausgewertet werden, da sich die Werte des Positionssignals gleichmäßig pro Wegänderung des Mittels verändern.

In einer besonderen bevorzugten Ausführungsform entspricht die erste Endposition einer ersten maximalen Auslenkung des Mittels und die zweite Endposition entspricht einer zweiten maximalen Auslenkung in der anderen Richtung. Dadurch wird der Wertebereich genau auf die maximal mögliche Bewegung entlang der Strecke ausgedehnt. Dadurch entspricht der elektronisch maximal mögliche Wertebereich genau der maximal möglichen mechanischen Auslenkung des Mittels, beispielsweise einem mechanischen Stellglied. Der Wertebereich des Positionssignals wird dadurch immer vollständig ausgenutzt. Der magnetische oder induktive Wegsensor verfügt somit über die maximal mögliche Dynamik des Positionssignals. Die Signalauflösung wird gegenüber herkömmlichen Sensoren erhöht. Dadurch ist der magnetische oder induktive Wegsensor optimal an verschiedene Stellglieder mit unterschiedlich weit bewegbaren Mitteln anpassbar.

Gemäß der Erfindung weist die Auswerteeinheit eine Messeinheit auf, um selbsttätig die erste und zweite Endposition zu bestimmen, indem wiederkehrend das Positionssignal ermittelt wird und eine Häufigkeitsauswerteeinheit vorgesehen ist, zur Auswertung, wie häufig eine Position in einem bestimmten Zeitintervall gemessen wurde. In Abhängigkeit von der Messhäufigkeit ist jeweils ein Positionswert der ersten bzw. zweiten Endposition zuordenbar und speicherbar. Dadurch wird die Anpassung des Wertebereichs des Positionssignals an die Endpositionen des bewegbaren Mittels vollautomatisch durchgeführt. Der magnetische oder induktive Wegsensor braucht lediglich in notwendigem Abstand zu dem Mittel montiert werden, und nach einer bestimmten Zeit, in der das Mittel häufig genug hin und her bewegt wurde, kann durch die Auswerteeinheit der Wertebereich selbsttätig eingestellt werden. Dadurch wird eine Inbetriebnahme und Installation des magnetischen oder induktiven Wegsensors ganz wesentlich vereinfacht, da der Wegsensor nur grob zu dem Mittel positioniert werden muss und eine genaue Zuordnung des Positionssignals zu dem ersten und zweiten Endpunkt elektronisch und vollautomatisch erfolgt Hierzu ist es lediglich notwendig, das Mittel genügend oft zwischen der ersten Endposition und der zweiten Endposition zu bewegen, bis die automatische Zuordnung der Grenzwerte zu den Endpositionswerten erfolgt ist. Nachträgliche Korrekturen sind zusätzlich noch über eine manuelle elektronische Einstellung möglich.

In einer besonders bevorzugten Ausführungsform ist das Mittel ein Kolben einer Kolben/Zylinderanordnung. Derartige Kolben/Zylinderanordnungen werden in der Automatisierung von Handhabungsmaschinen, beispielsweise in der Verpackungs- oder Verarbeitungsindustrie von Stückgütern eingesetzt Die Kolben/Zylinderanordnungen werden pneumatisch oder hydraulisch angetrieben. Um verschiedenste Anwendungen abzudecken werden die Kolben/Zylinderanordnungen in einer Vielzahl mit unterschiedlichen Hublängen angeboten. So liegen kleinste Hublängen bei wenigen Millimetern bis zu Hublängen von mehreren Metern. Mit dem erfindungsgemäßen magnetischen oder induktiven Wegsensor ist es vorteilhaft möglich, den Wertebereich des Wegsensors an die unterschiedlichsten Hublängen derartiger Kolben/Zylinderanordnungen anzupassen. Der erfindungsgemäße Wegsensor bietet darüber hinaus noch weiter die Möglichkeit, den Wertebereich optimal auf Teile einer Gesamthublänge anzupassen. Dies ist dann von großem Vorteil, wenn lediglich bestimmte Teilstrecken der Gesamthublänge gemessen werden sollen, oder wenn mehrere Teilbereiche mit verschiedenen magnetischen Wegsensoren unterschiedliche Auflösungen des Wertebereichs aufweisen sollen.

Weiter ist es möglich, für verschieden lange Kolben/Zylinderanordnungen magnetische oder induktive Wegsensoren mit einer identischen Anzahl von Sensorelementen und einem gleichen Erfassungsbereich zu verwenden und den Wertebereich auf die jeweils unterschiedlichen Kolben/Zylinderanordnungen anzupassen. Dadurch wird eine Lagerhaltung der magnetischen oder induktiven Wegsensoren beim Anwender vereinfacht, da ein Wegsensor für unterschiedliche Anwendungen anpassbar und einsetzbar ist.

Es ist über eine Einlerntaste oder ein mittels einer Signalleitung eingegebenes Teach-in-Signal ein Speichervorgang zum Speichem der Zuordnung des ersten und zweiten Grenzwertes zu den Endpositionswerten auslösbar. Durch die Einlerntaste wird der Speichervorgang vorteilhaft und einfach direkt am magnetischen oder induktiven Wegsensor durchgeführt. Dadurch kann der Speichervorgang direkt am Wegsensor ohne zusätzliche Hilfsmittel durchgeführt werden. Hierzu wird die Einlemtaste beispielsweise ein erstes Mal betätigt, um den ersten Grenzwert dem ersten Endpositionswert zuzuordnen und ein zweites Mal, um den zweiten Grenzwert dem zweiten Endpositionswert zuzuordnen. Eine Anpassung des Wertebereichs des Positionssignals auf die entlang der Strecke möglichen Positionswerte wird daraufhin automatisch durch implementierte Software in dem magnetischen oder induktiven Wegsensor durchgeführt.

Die Eingabe eines Teach-in-Signals über eine Signalleitung hat den Vorteil, dass eine Festlegung der Grenzwerte zu den Endpositionswerten automatisiert durch eine Steuerung, insbesondere eine Speicherprogrammierbare Steuerung (SPS) erfolgen kann. Dies hat den Vorteil, dass eine Zuordnung von Grenzwerten zu entsprechenden Endpositionswerten zentral für eine Vielzahl von magnetischen Wegsensoren koordiniert und automatisiert erfolgen kann.

Gemäß einer weiteren Ausführungsform ist zur Anzeige von Informationen wenigstens eine Leuchtdiode vorgesehen. Über die Leuchtdiode kann dann vorteilhaft ein Ablauf zum Zuordnen der Grenzwerte über die Einlemtaste angezeigt und gesteuert werden, indem durch unterschiedliche Blinksignale auf unterschiedliche, notwendige Handlungsmaßnahmen hingewiesen wird.

In einer bevorzugten Ausführungsform ist das Positionssignal ein analoges Strom- und/oder Spannungssignal. Durch ein analoges Signal kann sehr einfach die Positionsinformation ausgegeben und weiterverarbeitet werden. So kann das analoge Signal sehr einfach von einer Steuerung, insbesondere einer Speicherprogrammierbaren Steuerung eingelesen und ausgewertet werden. Durch das analoge Strom- oder Spannungssignal kann die Positionsinformation präzise und kontinuierlich angegeben werden.

Gemäß einer weiteren bevorzugten Ausführungsform ist das Positionssignal ein digitales Signal. Hierbei wird die Positionsinformation von der Auswerteeinheit in digitale Signalwerte umgewandelt und die digitalen Signalwerte über eine Schnittstelle oder eine Signalleitung zyklisch ausgegeben. Dies hat den Vorteil, dass die Positionsinformation beispielsweise sehr einfach über übergeordnete Feldbussysteme oder Feldnetze übermittelt werden kann, um die Positionsinformation zentral weiterzuverarbeiten.

In Weiterbildung der Erfindung ist es vorgesehen, dass die Zuordnung des ersten und zweiten Grenzwerts per Femüberwachung geändert oder korrigiert werden kann. Dadurch ist es möglich, eine Anpassung durchzuführen, ohne dass ein Servicetechniker direkt vor Ort tätig werden muss. Dies erlaubt somit eine schnelle Änderung oder Korrektur. Dadurch können auftretende Stillstandzeiten einer Maschine oder Anlage mit den erfindungsgemäßen magnetischen Wegsensoren deutlich verkürzt werden.

Im Folgenden wird die Erfindung an Hand von Ausführungsbeispielen unter Bezugnahme auf die Zeichnung im Einzelnen erläutert.

In der Zeichnung zeigt:
Figur 1
   eine schematische Darstellung eines erfindungsgemäßen magnetischen Wegsensors;
Figur 2
   eine schematische Darstellung eines Positionssignals eines magnetischen Wegsensors ohne elektronische Einstellung von Grenzwerten;
Figur 3 und 4
   jeweils ein Ausführungsbeispiel mit einem Positionssignal eines magnetischen Wegsensors mit elektronischer Einstellung von Grenzwerten.

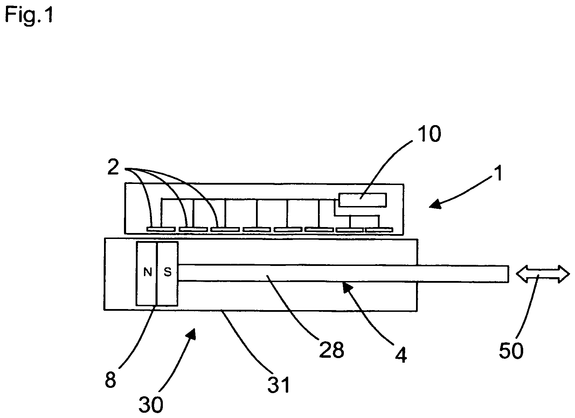

Eine in Fig. 1 dargestellte Kolben/Zylinderanordnung 30, die ein Pneumatikzylinder sein kann, enthält ein bewegbares Mittel 4 in Form eines Kolbens 28, der mittels einer Kolbenstange in dem Zylinder 31 in Längsrichtung 50 des Zylinders 31 bewegbar ist.

Bei dem bewegbaren Mittel kann es sich gemäß der Erfindung auch um beliebige mechanische, entlang einer Geraden oder in einem Bogen bewegende Teile handeln. Es kann sich bei dem Mittel um einen bewegenden Werkzeugschlitten, einer Werkzeugmaschine, oder auch um eine schwenkbare Werkzeugaufnahme handeln.

In der Fig. 1 ist der Kolben 28 in einer ersten Endlage dargestellt. Durch Verschieben des Kolbens 28 in Pfeilrichtung 50 ist der Kolben von der ersten in die zweite bzw. zweiten in die erste Endlage bringbar. Die Kolbenposition ist mittels eines magnetischen Wegsensors 1 ermittelbar, wobei der magnetische Wegsensor 1 auch ein induktiver Wegsensor sein kann und der Kolben 28 einen dargestellten Dauermagneten 8 trägt, dessen Position der magnetische Wegsensor 1 erfassen kann. Der magnetische oder induktive Wegsensor 1 weist eine Reihe von Sensorelementen 2 auf. Die Sensorelemente 2 können als Hallelemente, als magnetempfindliche Dioden, magnetempfindliche Widerstände oder als Spulen ausgebildet sein. Die Sensorelemente 2 werden dabei von dem vorbeibewegten Dauermagneten 8 beeinflusst, wodurch eine lineare Position des Dauermagneten 8 festgestellt werden kann. Der magnetische Wegsensor 1 ist an dem Zylinder 31 derart positioniert, dass er sowohl die erste als auch die zweite Endlage des Kolbens 28 erfassen kann. Die Ausgangssignale der einzelnen Sensorelemente werden von einer Auswerteeinheit 10 ausgewertet und einem Ausgang zur Ausgabe eines Positionssignals zugeführt. Die Auswerteeinheit 10 ist bevorzugt als Mikrocontroller ausgebildet. Weiter ist ein nicht dargestellter Speicher vorhanden. Eine elektrische Versorgung und das Positionssignal werden über eine Sensoranschlussleitung geführt.

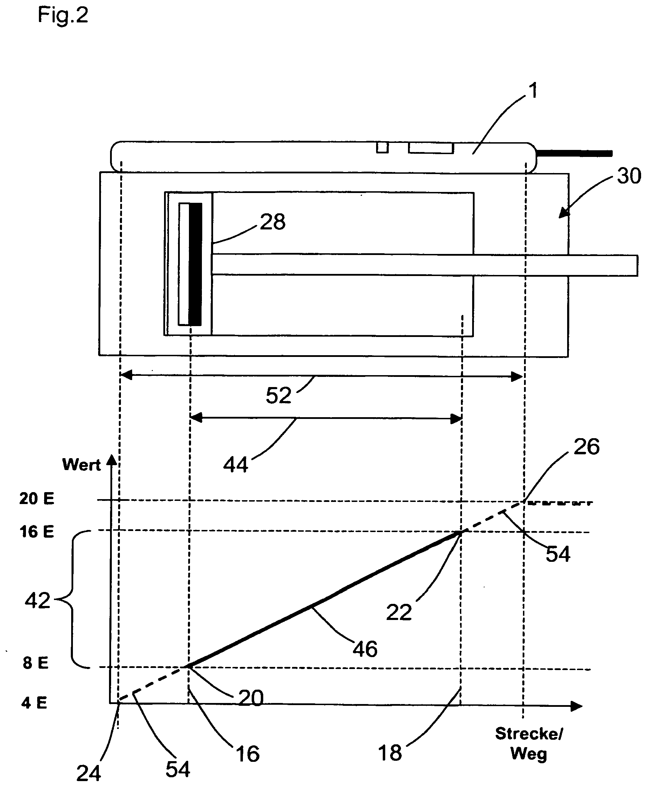

Figur 2 zeigt eine schematische Darstellung des magnetischen Wegsensors 1 an einer Kolben-/Zylinderanordnung 30 gemäß Figur 1. Der magnetische Wegsensor 1 weist einen maximalen Messbereich 52 auf, der einen maximalen Kolbenhub 44 der Kolben/Zylinderanordnung 30 überschreitet. Mit dem magnetischen Wegsensor 1 soll nun mit einer möglichst hohen Auflösung ein Positionssignal 46 entsprechend der Position des Kolbens 28 ausgegeben werden.

Im unteren Teil der Figur 2 ist schematisch ein Signaldiagramm gezeigt, um die Zusammenhänge zwischen Kolbenhub und Positionssignal 46 des magnetischen Wegsensors 1 zu zeigen. Auf der horizontalen Achse ist die Strecke aufgetragen, die der Kolben 28 zurücklegen kann. Auf der vertikalen Achse sind die Werte des Positionssignals 46 in beliebigen Einheiten angegeben. Bei den Einheiten kann es sich um die Größen Volt, Milliampere oder andere geeignete elektrische Größen handeln. Der maximale Kolbenhub reicht von einer ersten Endposition 16 bis zu einer zweiten Endposition 18. Da der maximale Messbereich 52 des magnetischen Wegsensors größer ist als der maximale Kolbenhub 44 des Kolbens 28, ist ein erster Endpositionswert 20 bei etwa 8 E und ein zweiter Endpositionswert 22 bei etwa 16 E des Wertebereichs 42 des Positionssignals 46. Da die Bewegung des Kolbens 28 nicht den gesamten Messbereich 52 des magnetischen Wegsensors 1 abdeckt, ist der Wertebereich 42 des Positionssignals 46 zunächst beschränkt auf einen Bereich zwischen den zwei Endpositionswerten 20 mit 8 E und 22 mit 16 E, obwohl der theoretisch mögliche Wertebereich des Positionssignals des magnetischen Sensors sich von erstem Grenzwert 24 mit 4 E bis zum zweiten Grenzwert 26 mit 20 E erstrecken würde, wie mit der gestrichelten Linie 54 dargestellt. Bei einer vollständigen Auslenkung des Kolbens würde somit zunächst nur ein Positionssignal von 8 E bis 16 E ausgegeben werden können, um die Kolbenposition anzeigen zu können.

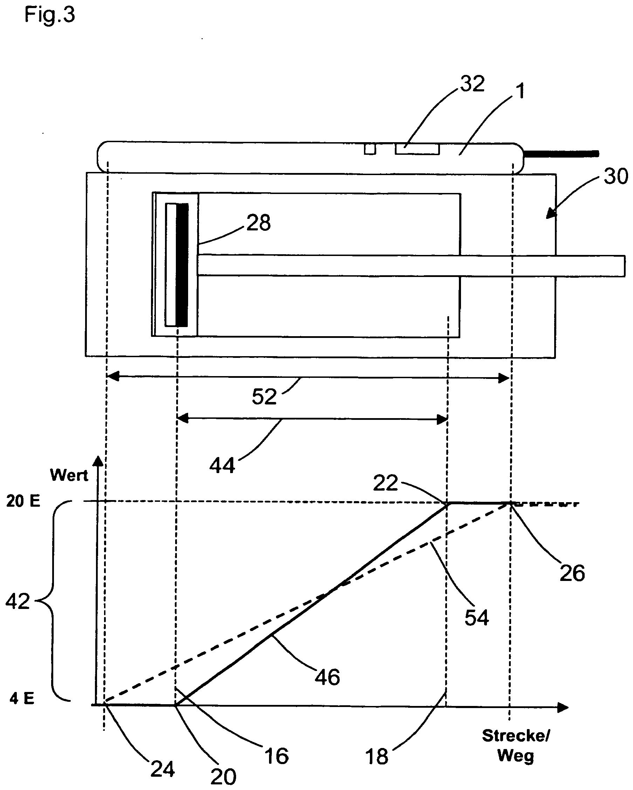

Ein Zuordnung von erstem Grenzwert 24 zu erstem Endpositionswert 20 und von zweitem Grenzwert 26 zu zweitem Endpositionswert 22 ist in Figur 3 dargestellt. Im oberen Teil der Figur ist die Kolben/Zylinderanordnung 30 mit dem angeordneten magnetischen Wegsensor 1 gemäß Figur 2 schematisch dargestellt. Wie bei Figur 2 bereits beschrieben, ist der maximale Kolbenhub 44 kürzer als der maximale Messbereich 52 des magnetischen Sensors 1.

Um das Positionssignal 46 elektronisch einzulernen wird der Kolben 28 zunächst in die erste Endposition 16 gebracht. Danach wird die Einlerntaste 32 betätigt. Durch das Betätigen der Einlerntaste 32 wird der Grenzwert 24 mit dem Wert 4 E dem ersten Endpositionswert 20 durch die Auswerteeinheit 10 zugeordnet und in dem Speicher abgespeichert. Dadurch wurde dem ersten Endpositionswert 20 der Wert von 4 E zugewiesen.

Anschließend wird der Kolben 28 in die zweite Endposition 18 bewegt. Durch erneutes Betätigen der Einlerntaste 32 wird der zweite Grenzwert 26 mit dem Wert 20 E dem zweiten Endpositionswert 22 durch die Auswerteeinheit zugeordnet und ebenfalls abgespeichert. Anschließend werden in der Auswerteeinheit die Zwischenwerte des Positionssignals 46 zwischen dem ersten Endpositionswert 20 und dem zweiten Endpositionswert 22 linear angepasst, so dass die Positionen des Kolbens 28 entlang der Strecke und die Werte des Positionssignals 46 linear zueinander sind. Dadurch ist jetzt gewährleistet, dass trotz des gegenüber dem maximalen Kolbenhub 44 größeren Messbereichs 52 des magnetischen Wegsensors 1 der Bereich des Positionssignals 46 einen maximalen Wertebereich 42 mit den Grenzwerten 24 und 26 von 4 E und 20 E aufweist. Das ursprüngliche Positionssignal gemäß der gestrichelten Linie 54 wird also elektronisch in das Positionssignal 46 umgewandelt zur Anpassung an den maximalen Kolbenhub 44.

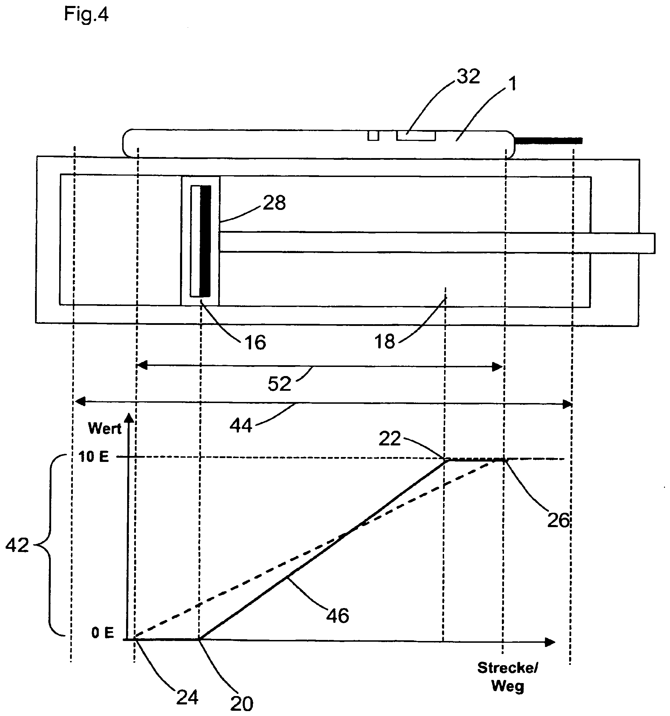

Figur 4 zeigt ein weiteres Ausführungsbeispiel, wobei im Unterschied zu dem Ausführungsbeispiel gemäß Figur 3, lediglich der maximale Kolbenhub 44 des Kolbens 28 größer ist als der maximale Erfassungsbereich 52 des magnetischen Wegsensors 1. Gemäß diesem Ausführungsbeispiel soll nun lediglich eine Teilstrecke zwischen einer ersten Endposition 16 und einer zweiten Endposition 18 von dem magnetischen Positionssensor 1 gemessen werden. Die Kolbenpositionen außerhalb dieses Bereiches zwischen den zwei Endpositionen 16 und 18 sollen dabei nicht erfasst werden. Eine solche Anwendung ist beispielsweise dann von Vorteil, wenn lediglich in einem Teilbereich des maximalen Kolbenhubs 44 eine exakte Positionsbestimmung notwendig ist.

Um das Positionssignal 46 mit einem maximalen Wertebereich 42 wiederum auf die Endpositionen 16 und 18 anzupassen, wird, wie zu Figur 3 bereits ausgeführt, der Kolben zunächst in die Endposition 16 gebracht. Danach wird die Einlerntaste 32 betätigt. Durch das Betätigen der Einlerntaste 32 wird der Grenzwert 24 mit dem Wert 0 E dem ersten Endpositionswert 20 durch die Auswerteeinheit zugeordnet und abgespeichert, wodurch der erste Endpositionswert den Wert von 0 E erhält.

Anschließend wird der Kolben 28 in die zweite Endposition 18 bewegt. Durch erneutes Betätigen der Einlerntaste 32 wird der zweite Grenzwert 26 dem zweiten Endpositionswert 22 durch die Auswerteeinheit zugeordnet und ebenfalls abgespeichert. Anschließend werden in der Auswerteeinheit die Zwischenwerte des Positionssignals 46 zwischen dem ersten Endpositionswert 20 und dem zweiten Endpositionswert 22 linear angepasst, so dass die Positionen des Kolbens 28 entlang der Strecke und die Werte des Positionssignals 46 linear zueinander sind. Dadurch ist jetzt gewährleistet, dass der Teilkolbenhub zwischen den Endpositionen 16 und 18 von dem Messbereich 52 des magnetischen Wegsensors 1, der größer ist als der Teilkolbenhub und kleiner ist als der maximale Kolbenhub 44, dennoch optimal durch den maximalen Wertebereich von 0 E bis 10 E des Positionssignals 46 aufgelöst werden kann.

Die Erfassung von Kolbenpositionen erfolgt gemäß einem weiteren nicht dargestellten Ausführungsbeispiel automatisch. Dabei werden die Kolbenendlagen automatisch mit Hilfe einer Messeinheit erfasst, um selbsttätig die erste und zweite Endposition zu bestimmen. Dazu wird wiederkehrend das Positionssignal ermittelt und eine Häufigkeitsauswerteeinheit bestimmt, wie häufig eine Position in einem bestimmten Zeitintervall gemessen wurde. In Abhängigkeit von der Messhäufigkeit wird jeweils ein Positionswert der jeweiligen ersten und zweiten Endposition zugeordnet und gespeichert.

In den allermeisten Applikationen befindet sich der Kolben die meiste Zeit in einer seiner Endlagen und wird nur relativ kurzzeitig zwischen den beiden Endlagen verfahren. Zunächst wird für dieses Ausführungsbeispiel vorausgesetzt, dass der magnetische Wegsensor nach Aktivierung wiederkehrend in kurzen Zeitabständen die jeweilige Position ermittelt und in seinen Messwertespeicher abspeichert, so dass die Auswerteeinheit eine gewisse Anzahl von abgespeicherten Messwerten verarbeiten kann. Die kurzen Zeitabstände sind dabei so gewählt, dass der magnetische Wegsensor bei Bewegung des Kolbens stets eine andere Kolbenposition ermittelt und in Ruhelage des Kolbens immer wieder denselben Positionswert misst. Nach einem bestimmten Zeitfenster, das sich aus mehreren der vorgenannten kurzen Zeitabständen zusammensetzt, wird festgestellt, wie groß die Häufigkeit ist, dass ein und derselbe Messwert ermittelt wurde.

In der Auswerteeinheit des magnetischen Wegsensors wird nun die Häufigkeit, ein und denselben Positionswert innerhalb des bestimmten Zeitfensters zu messen, in Abhängigkeit von der Kolbenposition ausgewertet. Da nur in den beiden Endlagen die Häufigkeit merklich von Null verschieden ist, werden diese beiden Kolbenpositionen als die gemessenen Endlagen erkannt und vom magnetischen Wegsensor eingestellt. Vorteilhafterweise werden dabei die Positionswerte dann Endpositionen des Kolbens zugeordnet, wenn die Häufigkeit eine bestimmte Mindestanzahl überschritten hat, wobei diese Mindestanzahl mit einer vorgegebenen Toleranz behaftet ist, da aufgrund mechanischer Toleranzen der Kolben nicht bei jedem Hub exakt die gleiche Endlage erreicht. Die Sicherheit, die Positionswerte der korrekten Endposition des Kolbens zuzuordnen, kann erhöht werden, wenn der Positionswert erst dann zugeordnet wird, wenn die Mindestanzahl sich mindestens einmal wiederholt hat, also zweimal hintereinander gemessen wurde. Die beiden so gefundenen Positionswerte für die Endpositionen des Kolbens werden in der Auswerteeinheit herangezogen, um die Zuordnung von erstem Grenzwert zu erstem Endpositionswert und zweitem Grenzwert zu zweitem Endpositionswert vorzunehmen und abzuspeichern.

Wenn nun durch irgendwelche äußeren Bedingungen die Endpositionen der Kolben sich ändern, wird dies in der Auswerteeinheit dadurch berücksichtigt, dass die Häufigkeit immer nur an den aktuellen neuen Kolbenpositionen erhöht ist. Auf diese Weise kann der Wertebereich des Positionssignals den aktuellen Endpositionen des Kolbens nachgeführt werden, wobei die oben genannten Kriterien für die Endpositionswertzuordnung Anwendung finden.

### Bezugszeichen:

1 Magnetischer oder induktiver Wegsensor
2 Sensorelemente
4 Mittel
8 Dauermagnet
10 Auswerteeinheit
16 erste Endposition
18 zweite Endposition
20 erster Endpositionswert
22 zweiter Endpositionswert
24 erster Grenzwert
26 zweiter Grenzwert
28 Kolben
30 Kolben/Zylinderanordnung
31 Zylinder
32 Einlerntaste
42 Wertebereich
44 maximaler Kolbenhub
46 Positionssignal
50 Pfeilrichtung/Längsrichtung
52 maximaler Messbereich
54 gestrichelte Linie
E Einheit

## Patentansprüche

1. Magnetischer oder induktiver Wegsensor mit wenigstens zwei Sensorelementen (2) zur Erfassung von Positionen eines bewegbaren Mittels (4) entlang einer Strecke zwischen einer ersten Endposition (16) und einer zweiten Endposition (18), wobei das Mittel (4) einen Dauermagneten (8) trägt, mit einer elektronischen Auswerteeinheit (10) zur Auswertung der Sensorelemente (2) und die Auswerteeinheit (10) einen Ausgang aufweist für ein die Position repräsentierendes Positionssignal (46) mit einem Wertebereich (42), dessen Grenzwerte (24, 26) den beiden Endpositionen (16, 18) entsprechen, wobei die Grenzwerte (24, 26) unabhängig von den Endpositionen (16, 18) elektronisch einstellbar festlegbar sind und die Zuordnung von erstem Grenzwert (24) zu erstem Endpositionswert (20) und zweitem Grenzwert (26) zu zweitem Endpositionswert (22) speicherbar ist, um den Wertebereich (42) des Positionssignals (46) auf die entlang der Strecke möglichen Positionswerte anzupassen, wobei die Sensorelemente entlang der Strecke angeordnet sind, **dadurch gekennzeichnet, dass** die Auswerteeinheit (10) eine Messeinheit aufweist, um selbsttätig die erste und zweite Endposition (16, 18) zu bestimmen, indem wiederkehrend das Positionssignal (46) ermittelt wird und eine Häufigkeitsauswerteeinheit vorgesehen ist, zur Auswertung, wie häufig eine Position in einem bestimmten Zeitintervall gemessen wurde, wobei in Abhängigkeit von der Messhäufigkeit jeweils ein Positionswert (20, 22) der ersten bzw. zweiten Endposition zuordenbar und speicherbar ist.

2. Magnetischer oder induktiver Wegsensor nach Anspruch 1, **dadurch gekennzeichnet, dass** die Grenzwerte (24, 26) jeweils einen maximalen oder minimalen Wert des Wertebereiches (42) aufweisen.

3. Magnetischer oder induktiver Wegsensor nach einem der vorhergehenden Ansprüche, **dadurch gekennzeichnet, dass** Positionen entlang der Strecke und Werte des Wertebereichs (42) linear zueinander sind.

4. Magnetischer oder induktiver Wegsensor nach einem der vorhergehenden Ansprüche, **dadurch gekennzeichnet, dass** die erste Endposition (16) einer ersten maximalen Auslenkung des Mittels (4) und die zweite Endposition (18) einer zweiten maximalen Auslenkung in der anderen Richtung entspricht.

5. Magnetischer oder induktiver Wegsensor nach einem der vorhergehenden Ansprüche, **dadurch gekennzeichnet, dass** das Mittel (4) ein Kolben (28) einer Kolben/Zylinderanordnung (30) ist.

6. Magnetischer oder induktiver Wegsensor nach einem der vorhergehenden Ansprüche, **dadurch gekennzeichnet, dass** über eine Einlerntaste (32) oder ein mittels einer Signalleitung eingegebenes Teach-in-Signal ein Speichervorgang zum Speichern des ersten und zweiten Endppsitionswertes (20, 22) auslösbar ist.

7. Magnetischer oder induktiver Wegsensor nach einem der vorhergehenden Ansprüche, **dadurch gekennzeichnet, dass** das Positionssignal (46) ein analoges Strom- und/oder Spannungssignal ist.

8. Verfahren zur Erfassung von Positionen aufgrund von wenigstens zwei Sensorsignalen, ausgelöst durch ein, einen Dauermagneten (8) tragendes, bewegbares Mittel (4) entlang einer Strecke zwischen einer ersten Endposition (16) und einer zweiten Endposition (18), mit einer elektronischen Auswertung der Sensorsignale und ein die Position repräsentierendes Positionssignal (46) mit einem Wertebereich (42), dessen Grenzwerte (24, 26) den beiden Endpositionen (16, 18) entsprechen, wobei die Grenzwerte (24, 26) unabhängig von den Endpositionen (16, 18) elektronisch eingestellt werden und die Zuordnung von erstem Grenzwert (24) zu erstem Endpositionswert (20) und zweitem Grenzwert (26) zu zweitem Endpositionswert (22) gespeichert wird, um den Wertebereich (42) des Positionssignals (46) auf die entlang der Strecke möglichen Positionswerte anzupassen, wobei die Sensorsignale jeweils durch Sensorelemente erzeugt werden, die entlang der Strecke angeordnet sind, **dadurch gekennzeichnet, dass** Positionswerte wiederkehrend erfasst werden und eine Häufigkeitsauswertung vorgenommen wird und nach einer vorbestimmten Anzahl von Bewegungen des Mittels (4) entlang der Strecke, die Positionswerte (20, 22), an denen jeweils derselbe Positionswert gehäuft auftritt, der ersten bzw. zweiten Endposition (16; 18) zugeordnet werden.

9. Verfahren nach Anspruch 9, **dadurch gekennzeichnet, dass** die Grenzwerte (24, 26) einem maximalen oder minimalen Wert des Wertebereiches (42) entsprechen.

10. Verfahren nach Anspruch 9 bis 10, **dadurch gekennzeichnet, dass** Positionen entlang der Strecke und Werte des Wertebereichs (42) linear einander zugeordnet werden.

11. Verfahren nach Anspruch 9 bis 13, **dadurch gekennzeichnet, dass** über ein Teach-in-Signal ein Speichervorgang zum Speichern des ersten und zweiten Endpositionswertes (20, 22) ausgelöst wird.

## Claims

1. A magnetic or inductive range sensor with at least two sensor elements (2) for detecting positions of a movable means (4) along a path between a first end position (16) and a second end position (18), wherein the means (4) comprises a permanent magnet (8), with an electronic evaluation unit (10) for evaluating the sensor elements (2) and the evaluation unit (10) having an output for a position signal (46) with a value range (42) which represents the position which limit values (24, 26) correspond to the two end positions (16, 18) **wherein**
the limit values (24, 26) can be determined electronically, adjustable and independent of the end positions (16, 18) and the allocation of the first limit value (24) to the first end position value (20) and the second limit value (26) to second end position value (22) can be stored, in order to adjust the value range (42) of the position signal (46) to the possible position values along the path, **characterized in that**, the evaluation unit (10) comprises a measuring unit in order to determine the first and second end position (16, 18) by determining recurrently the position signal (46) and a frequency evaluation unit is provided for evaluating how often a position was measured in a certain time interval at which in dependence of the frequency of the measurement at a time one position value (20, 22) of the first or the second end position can be assigned and stored.

2. A magnetic or inductive range sensor in accordance with claim 1, **characterized in that** the limit values (24, 26) each have a maximum or minimum value of the value range (42).

3. A magnetic or inductive range sensor in accordance with one of the preceding claims, **characterized in that** positions along the path and values of the value range (42) are linearly to one another.

4. A magnetic or inductive range sensor in accordance with one of the preceding claims, **characterized in that** the first end position (16) corresponds to a first maximum deflection of the means (4) and the second end position (18) corresponds to a second maximum deflection corresponds in the other direction.

5. A magnetic or inductive range sensor in accordance with one of the preceding claims, **characterized in that** the means (4) is a piston (28) of a piston/cylinder arrangement (30).

6. A magnetic or inductive range sensor in accordance with of the preceding claims, **characterized in that** through a teach-in-button (32) or a teach-in-signal which is entered by means of a signal line, a storing process for storing the first and second end position values (20, 22) can be triggered.

7. A magnetic or inductive range sensor in accordance with one of the preceding claims, **characterized in that** the position signal (46) is an analog current and/or voltage signal.

8. A method for detection of positions based on at least two sensor signals triggered by a moveable means supporting a permanent magnet (8) along a path between a first end position (16) and a second end position (18), with an electronic evaluation of the sensor signals and position signal (46) with a value range (42) representing the position, which limits (24, 26) correspond to the two end positions (16, 18),
**wherein**
the limit values (24, 26) can be set electronically independent of the end positions (24, 26) and the allocation of the first limit value (24) to the first end position value (20) and of the second limit value (26) to the second end position value (22) is stored in order to adapt the value range (42) of the position signal (46) to the possible position values along the path, whereas the sensor signals are generated by sensor elements which are arranged along the path, **characterized in that**, position values are detected recurrently and a statistical analysis is performed and after a predetermined number of movements of the means (4) along the path, the position values (20, 22), at which the same position value appears accumulated, are assigned to the first and second end position (16, 18), respectively.

9. A method in accordance with claim 9, **characterized in that** limit values (24, 26) correspond to a maximum or minimum value of the value range (42).

10. A method in accordance with claim 9 to 10, **characterized in that** positions along the path and values of the value range (42) are arranged linearly to each other.

11. Method according to claim 9 to 13, **characterized in that** a storing operation for storing the first and second end position value (20, 22) is triggered by a teach-in signal.

## Revendications

1. Capteur de course magnétique ou inductif comprenant au moins deux éléments capteurs (2) pour détecter des positions d'un organe déplaçable (4) le long d'un trajet entre une première position finale (16) et une seconde position finale (18), dans lequel l'organe (4) porte un aimant permanent (8), avec une unité d'évaluation électronique (10) pour évaluer les éléments capteurs (2) et l'unité d'évaluation (10) comporte une sortie pour un signal de position (46) représentant la position avec une plage de valeurs (42) dont les valeurs limites (24, 26) correspondent aux deux positions finales (16, 18),
les valeurs limites (24, 26) étant susceptibles d'être déterminées de manière réglable par voie électronique indépendamment des positions finales (16, 18), et l'association de la première valeur limite (24) à la première valeur de position finale (20) et de la seconde valeur limite (26) à la seconde valeur de position finale (22) est susceptible d'être mémorisée, afin d'adapter la plage de valeurs (42) du signal de position (46) aux valeurs de position possibles le long du trajet, lesdits éléments capteurs étant agencés le long du trajet, **caractérisé en ce que** l'unité d'évaluation (10) comprend une unité de mesure afin de déterminer de façon autonome la première et la seconde position finale (16, 18), du fait que le signal de position (46) est déterminé de manière répétitive et une unité d'évaluation de fréquence est prévue pour évaluer à quelle fréquence une position a été mesurée dans un intervalle temporel déterminé, et en fonction de la fréquence de mesure, une valeur de position respective (20, 21) est susceptible d'être associée et mémorisée à la première ou à la seconde position final.

2. Capteur de course magnétique ou inductif selon la revendication 1, **caractérisé en ce que** les valeurs limites (24, 26) présentent chacune une valeur maximum ou minimum de la plage de valeurs (42).

3. Capteur de course magnétique ou inductif selon l'une des revendications précédentes, **caractérisé en ce que** les positions le long du trajet et les valeurs de la plage de valeurs (42) sont en relation linéaire.

4. Capteur de course magnétique ou inductif selon l'une des revendications précédentes, **caractérisé en ce que** la première position finale (16) correspond à une première déviation maximum de l'organe (4), et la seconde position finale (18) correspond à une seconde déviation maximum dans l'autre direction.

5. Capteur de course magnétique ou inductif selon l'une des revendications précédentes, **caractérisé en ce que** l'organe (4) est un piston (28) d'un agencement à piston-et-cylindre (30).

6. Capteur de course magnétique ou inductif selon l'une des revendications précédentes, **caractérisé en ce qu'**un processus de mémorisation, destiné à mémorisé la première et la seconde valeur de position finale (20, 22) est susceptible d'être déclenché via une touche d'apprentissage (32) ou via un signal d'apprentissage injecté au moyen d'une ligne de signalisation.

7. Capteur de course magnétique ou inductif selon l'une des revendications précédentes, **caractérisé en ce que** le signal de position (46) est un signal analogique de courant et/ou de tension.

8. Procédé pour la détection de position au moyen d'au moins deux signaux de capteur, déclenchés par un organe (4) déplaçable qui porte un aimant permanent (8), le long d'un trajet entre une première position finale (16) et une seconde position finale (18), avec une évaluation électronique des signaux de capteur, et d'un signal de position (46) représentant la position, avec une plage de valeurs (42) dont les valeurs limites (24, 26) correspondent aux deux positions finales (16, 18),
les valeurs limites (24, 26) étant réglées par voie électronique indépendamment des positions finales (16, 18), et l'association de la première valeur limite (24) à la première valeur de position finale (20), et de la seconde valeur limite (26) à la seconde valeur de position finale (22) est mémorisée, afin d'adapter la plage de valeurs (42) du signal de position (46) aux valeurs de position possibles le long du trajet, et les signaux de capteur sont engendrés respectivement par des éléments capteurs qui sont agencés le long du trajet, **caractérisé en ce que** les valeurs de position sont détectées de manière répétitive, et une évaluation de fréquence est exécutée, et après un nombre prédéterminé de déplacements de l'organe (4) le long du trajet, les valeurs de position (20, 22), auxquelles à chaque fois la même valeur de position se produit de manière fréquente, sont associées à la première ou à la seconde position finale (16; 18).

9. Procédé selon la revendication 9, **caractérisé en ce que** les valeurs limites (24, 26) correspondent à une valeur maximum ou minimum de la plage de valeurs (42).

10. Procédé selon la revendication 9 ou 10, **caractérisé en ce que** les positions le long du trajet et les valeurs de la plage de valeurs (42) sont mutuellement associées de manière linéaire.

11. Procédé selon les revendications 9 à 13, **caractérisé en ce que** l'on déclenche un processus de mémorisation via un signal d'apprentissage afin de mémoriser la première et la seconde valeur de position finale (20, 22).
